# EUROPEAN PATENT APPLICATION

(11) **EP 2 175 427 A1**
(43) Date of publication of application: **14.04.2010**
(21) Application number: 09171584.7
(22) Date of filing: 29.09.2009
(51) Int. Cl.: G07C 9/00, G06K 9/00

(54) **Authentication method**

(30) Priority: 03.10.2008 JP 2008258952
(71) Applicant: Fujitsu Limited, Kawasaki-shi, Kanagawa 211-8588 (JP)
(72) Inventor: Fukuda, Mitsuaki, Kanagawa 211-8588 (JP); Hama, Soichi, Kanagawa 211-8588 (JP); Aoki, Takahiro, Kanagawa 211-8588 (JP)
(74) Representative: HOFFMANN EITLE

(57) **Abstract**

A method of authenticating a user includes storing a reference biometric data of the user, performing initial authentication by obtaining biometric data of the user and comparing the obtained biometric data with the reference biometric data, storing the obtained biometric data upon successful initial authentication, performing second and subsequent authentication by obtaining biometric data of the user and comparing instantaneously obtained biometric data with the reference biometric data and the stored obtained biometric data, and updating the stored obtained biometric data each time the second or the subsequent authentication is successful.

## Description

### FIELD

A certain aspect of the embodiments discussed herein is related to an authentication method.

### BACKGROUND

For a building which a large number of persons go to and come from, an area requiring the high security is setted, such as a computer room in which private information and secret information is managed. In order to prevent the leakage of information from the area, access control is executed to limit the access of an unauthorized person, The access control uses a biometrical technology for authorization of an identified person by using body characteristics such as the fingerprint, vein, face image, and iris. As an application example of the authentication system, it is well known of the variation in security level for entering in a specific site, security level for entering in a specific building in the site, and security level for entering in a specific area such as a computer room in the building. Then, it is set that the biometrical authentication is subjected once and the entering in a high-security area is not possible, the biometrical authentication is iteratively subjected several times, and processing gradually advances to the security at higher level.

That is, the approach to an area at the higher-level security step by step is possible with the biometrical authentication at three times upon entering the site, the building, and the computer room.

Further, also in the use of a personal computer or communication network as well as the access control, a system is well known that the biometrical authentication is stepwise executed at plural times and operation with higher authorities is gradually possible.

Meanwhile, in the multi-step authentication, with a structure for setting the security to be higher than that at the previous step as the step advances, the use of the same vital type such as fingerprint is limited in all steps. That is, there is a feature that the biometrical authentication does not always sense the completely identical vital information even if a person is substantially the identified one, and a difference occurs to some degree each time when obtaining the vital information. In particular, upon comparing vital information through time passage after obtaining the vital information with each other, the difference is relatively increased. In order to allow the difference, the biometrical authentication needs the authentication with a slightly wider range of the vital information for the identification. A problem is caused that, if every difference is not allowed, even when a person is the identified one, the person is refused because he/she is another.

As mentioned above, all the biometrical authentication requires the setting with a wider range of the vital information for the identification to some extent. In term of the balance between the security and the convenience, the range can be adjusted though the narrow range is limited. When excessively narrowing the identification range in a case of requiring the high security, the biometrical authentication is not used by the identified person and thus the convenience is lost.

Japanese Laid-open Patent Publication No. 2005-128847, Japanese Laid-open Patent Publication No. 2002-230553, Japanese Laid-open Patent Publication No. 11-253426 and Japanese Laid-open Patent Publication 2006-59071 have been proposed.

### SUMMARY

Accordingly, it is an object of the present invention to improve accuracy of a biometrical authentication.

According to an aspect of an embodiment, a method of authenticating a user includes storing a reference biometric data of the user, performing initial authentication by obtaining biometric data of the user and comparing the obtained biometric data with the reference biometric data, storing the obtained biometric data upon successful initial authentication, performing authentication and subsequent authentication by obtaining biometric data of the user and comparing instantaneously obtained biometric data with the reference biometric data and the stored obtained biometric data, and updating the stored obtained biometric data each time the second or the subsequent authentication is successful.

### BRIEF DESCRIPTION OF DRAWINGS

Fig. 1 is a diagram illustrating the structure of an authentication system according to the first embodiment;
Figs. 2A, 2B and 2C are diagrams illustrating an authentication range of the authentication system;
Fig. 3 is a diagram illustrating processing of vital information in the biometrical device;
Fig. 4 is a diagram illustrating a relationship between registered information and a range of vital information by which a person is the identified one;
Figs. 5A and 5B are diagrams illustrating a comparison result when a user himself/herself performs authentication at the first and second steps;
Figs. 6A and 6B are diagrams illustrating a comparison result when the authentication at the second step is performed by another person;
Figs. 7A and 7B are diagrams illustrating an authentication range at the second step in consideration of the vital information at the first step;
Fig. 8 is a diagram illustrating an example of a functional structure of the biometrical device at the first to third steps according to the second embodiment;
Fig. 9 is a diagram illustrating an example of the hardware structure of the biometrical device;
Fig. 10 is a flowchart illustrating an authentication method and processing of an authentication program;
Figs. 11A and 11B are flowcharts illustrating the authentication processing of the biometrical device at the first step;
Figs. 12A and 12B are flowcharts illustrating reception processing of the vital information from the biometrical device at the first step;
Figs. 13A to 13D are flowcharts illustrating the authentication processing of the biometrical device at the second step;
Figs. 14A and 14B are flowcharts illustrating the reception processing of the vital information from the biometrical device at the second step;
Figs. 15A to 15D are flowcharts illustrating the authentication processing in the biometrical device at the third step;
Fig. 16 is a functional block diagram illustrating the biometrical device according to the third embodiment;
Fig. 17 is a diagram illustrating processing of the vital information with an authentication system according to the fourth embodiment;
Figs. 18A, 18B and 18C are diagrams illustrating an authentication range in multi-step authentication according to a conventional art; and
Figs. 19A, 19B and 19C are diagrams illustrating an example of the structure of a conventional multi-step biometrical device.

### DESCRIPTION OF EMBODIMENTS

Preferred embodiments of the present art will be described with reference to the accompanying drawings.

### First embodiment:

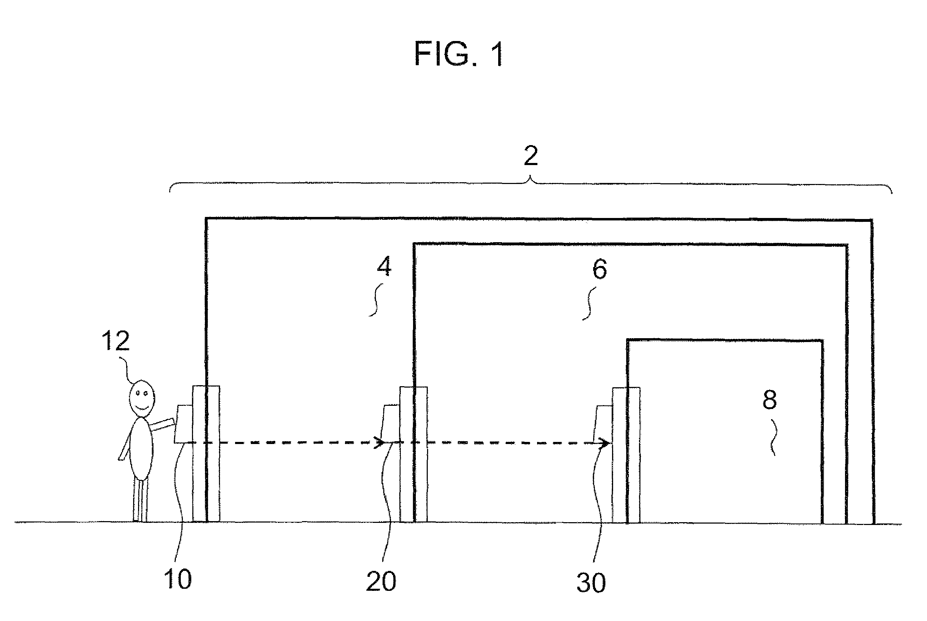

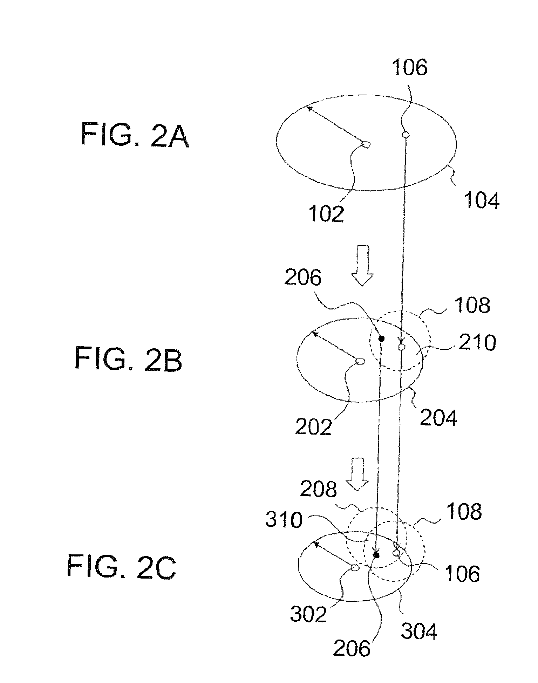

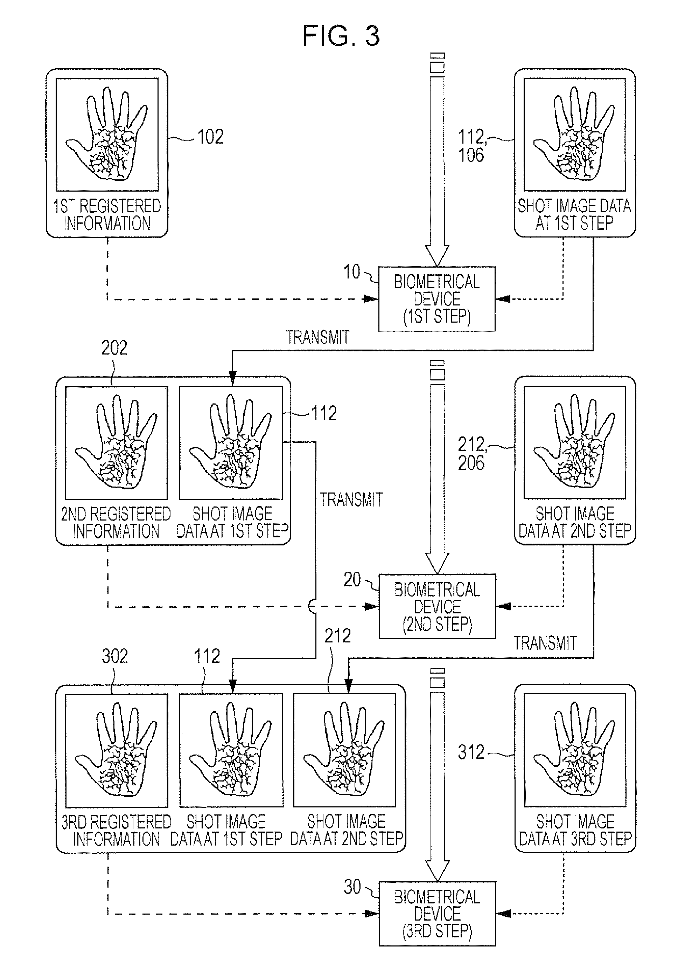

Figs. 1 to 3 are referred to according to the first embodiment. Fig. 1 is a diagram illustrating a structure of an authentication system according to the first embodiment. Figs. 2A to2C are diagrams illustrating an authentication range of the authentication system. Fig. 3 is a diagram illustrating processing of vital information with a biometrical device. Contents illustrated in Figs. 1 to 3 are one example and the present art is not limited to this.

An authentication system 2 has three security areas 4, 6, and 8 to which targets are setted in advance, for setting the security levels according to the targets. Specifically, a security area 4 has a low level set for allowing an in-mode to the site, the security area 6 has an intermediate level for allowing an in/out-mode to the site, and the security areas 8 has a high level for allowing in/out-mode only to a person having a predetermined right at a computer room in a building.

Then, biometrical devices 10, 20, and 30 for determining whether or not a person is the person having the right for the in/out-mode are disposed to the security areas 4, 6, and 8. Each of the biometrical devices 10, 20, and 30 obtains vital information such as fingerprint, from a user 12 that demands an allowance of the in-mode, and determine whether or not the vital information matches the same type of registered vital information that is registered in advance or whether or not the devices are respectively within predetermined ranges.

Therefore, authorization with plural steps is required to the user 12 that demands the allowance for in-mode to the security areas 8 at the high level. Then, the authentication system 2 has a structure for using the vital information of the users 12 obtained by the biometrical devices 10, 20, and 30 for the authentication at the next step.

In this case, as illustrated in Figs. 2A to 2C, a common range between predetermined ranges 108 and 208 determined by vital information 106 and 206 obtained by the authentication at each step and the authentication ranges 104, 204, and 304 determined by information (registered vital information) 102, 202, and 302 registered in advance to the biometrical devices 10, 20, and 30 is setted as authentication ranges 210 and 310 at each step, thereby raising the security. Each of the biometrical devices 10, 20, and 30 stores reference biometric data of a user.

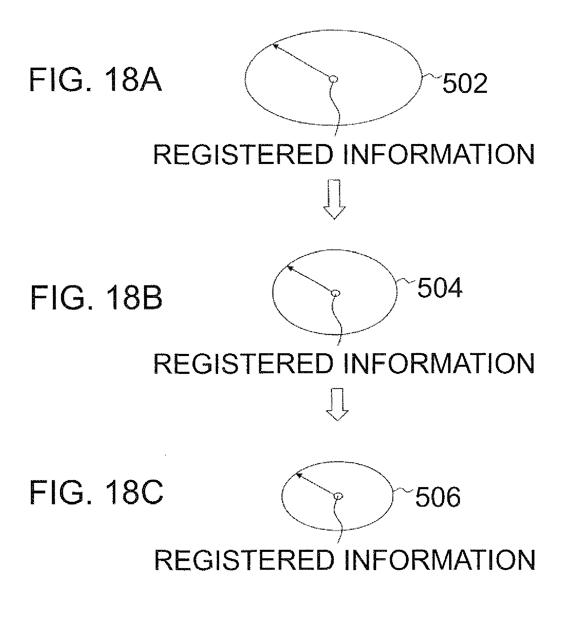

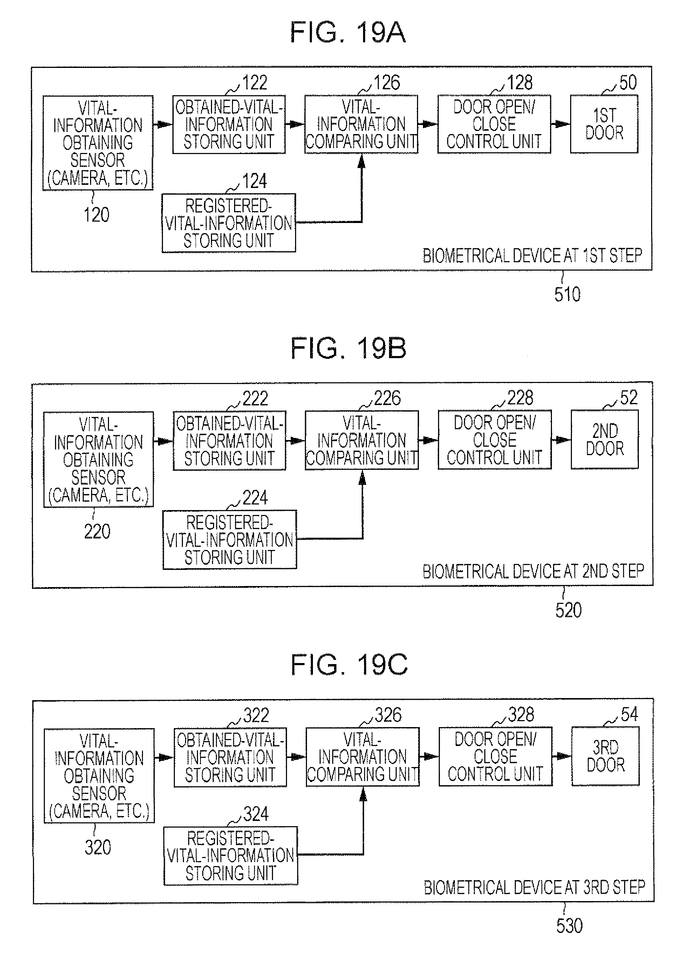

Therefore, as illustrated in Figs. 18A to 18C, in order to ensure the use of the identified person having the use authorization while increasing the security, it is limited to improve the security to some extent by gradually narrowing the range for identifying whether or not a person is the identified one as the step advances. In this case, as illustrated in Figs. 19A, 19B and 19C, authentication devices 510, 520, and 530 independently function in the authentication at each step. With the structure, when stepwise narrowing authentication ranges 502, 504, and 506 as illustrated in Figs. 18A to 18C, an error for allowing the identified person is prevented. Therefore, a certain wider range is setted as the authentication range and, thus, even in the authentication at the latter step, the identified person is determined with a wide range. As a consequence, there is a high risk of an error for allowing another person that the other person accidentally has matching vital information within the range and is erroneously authenticated as the identified person.

That is, completely the same vital information is not always sensed even by the identified person as mentioned above, and the difference is caused to some extent every time for inputting the vital information. When the vital information with the passage of a long time is compared with each other, a large difference is further caused. However, when the passage time is relatively short, the difference between the vital information is small. In general, in consideration of the authentication after several days from the registration of the vital information used for the biometrical authentication, it is necessary to authenticate whether or not a person is the identified one with a wide range by assuming that a relatively large difference is caused in the living body of the identified person. However, in the authentication system 2, in addition to the registered vital information, the vital information newly-inputted by the biometrical devices 10 and 20 by the previous step is added to an authentication condition and is limited as that at the current using day, thereby determining the identified person with the vital information within a narrow difference range.

Herein, a description will be given of a method for setting the authentication ranges 104, 204, and 304 and the predetermined ranges 108 and 208 based on the vital information 106 and 206. In the case of an authentication system using fingerprint information, registered fingerprint information is compared with inputted fingerprint information, and the similarity is calculated, thereby performing authentication. The calculation of the similarity uses a characteristic-point system in which a characteristic point such as a branch point or end point of the registered fingerprint information and the inputted fingerprint information is extracted, and information such as position or direction thereof is as a number and is compared with each other. Then, a predetermined threshold is setted
to the similarity to set the authentication range.

The characteristic-point system determines the similarity on the basis of the number of matching characteristic points. Alternatively, another factor may be used, and the present art is not limited to the number or rate of matching points of the similarity. Further, with regard to the similarity, the present art is not limited to the characteristic-point system, and may apply a calculating method using a pattern matching system. In addition, upon using the vital information except for fingerprint information, the present art may use a proper calculating method in accordance therewith.

Next, a description will be given of authentication processing with the authentication system 2 with reference to Fig. 3.

### Authentication at First Step:

In the authentication at the first step, the user 12 inputs shot image data 112 at the first step, as the first vital information 106, to the biometrical device 10, and compares the inputted data with the first registered information 102 that is registered in advance. As illustrated in Figs. 2A to 2C, in the authentication, when the first vital information 106 is within the authentication range 104 based on the first registered information 102, it is determined that a person is the identified one in the authentication at the first step. Further, when the first vital information 106 is not within the authentication range 104 based on the first registered information 102, it is determined that a person is another and the access is then refused. The biometrical device 10 performs initial authentication by obtaining biometric data of the user and comparing the obtained biometric data with the reference biometric data.

Then, when it is determined as the authentication result that a person is the identified one, the first biometrical device 10 transmits the shot image data 112 (106) at the first step obtained from the user 12 to the second biometrical device 20.

### Authentication at Second Step:

In the authentication at the second step, the shot image data 112 (106) at the first step transmitted from the first biometrical device 10 determines whether or not the vital information is within the second registered information 202 registered in advance to the second biometrical device 20. In this processing, a common range between the authentication range 204 based on the registered information 202 set to the biometrical device 20 and the authentication range 108 based on the first vital information 106 is set as the second authentication range 210. That is, as illustrated in Figs. 2A to 2C, because, when the first vital information 106 is out of the range of the registered information 202 of the biometrical device 20, the user 12 that inputs the vital information such as fingerprint is not originally authenticated by the biometrical device 20, and the second authentication range 210 does not need to be created on the basis of the vital information that is not authenticated. Therefore, when the first vital information 106 is out of the authentication range 204 of the registered information 202, it is determined as an error and the authentication at the second step is not performed. The biometrical device 20 stores the obtained biometric data upon successful initial authentication, performs second and subsequent authentication by obtaining biometric data of the user and comparing instantaneously obtained biometric data with the reference biometric data and the stored obtained biometric data, and updates the stored obtained biometric data each time the second and subsequent authentication is successful.

When it is determined that the first vital information 106 is within the authentication range 204 of the second registered information 202, the user 12 captures the shot image data 212 (206) at the second step, inputted to the second biometrical device 20. Then, as determination whether or not the vital information is within the second authentication ranges 210 (Figs. 2A to 2C), the second registered information 202 is compared with the shot image data 112 at the first step. When it is determined as a result of the comparison at the second step that a person is the identified one, the identified person can be subjected to the authentication.

### Authentication at Third Step:

In the authentication at the third step, similarly to the authentication processing at the second step, the shot image data 212 (206) at the second step is transmitted from the second biometrical device 20 and is obtained. Further, the third biometrical device 30 also receives the obtained shot image data 112 (106) at the first step to the second biometrical device 20. As illustrated in Figs. 2A to 2C, after checking that the obtained first vital information 106 and second vital information 206 is within the authentication range 304 of the registered information 302 of the third biometrical device 30, a common range between the authentication ranges 108 and 208 based on the vital information 106 and 206 and the authentication range 304 based on the registered information 302 is determined as the third authentication range 310.

Consequently, as comparison processing between the shot image data 312 at the third step obtained by the third biometrical device 30 and the third authentication range 310, a comparison is performed between the third registered information 302, the shot image data 112 at the first step, and the shot image data 212 at the second step. Then, when it is determined a person is the identified one, that is, when the vital information is within the third authentication range 310 illustrated in Figs. 2A to 2C, the identified person can be subjected to the authentication.

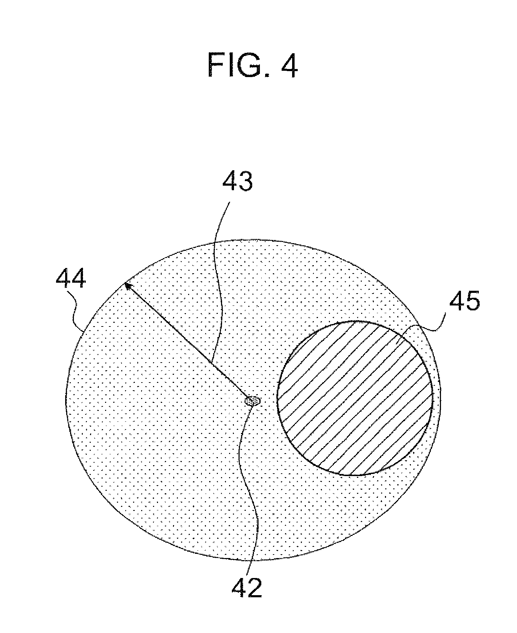

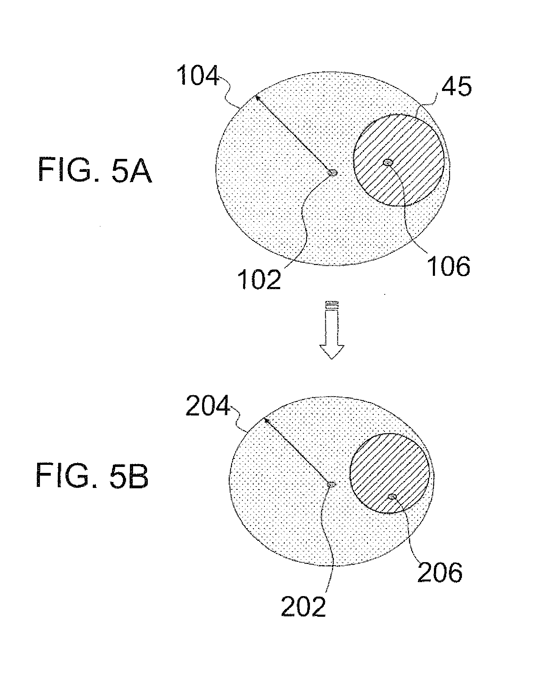

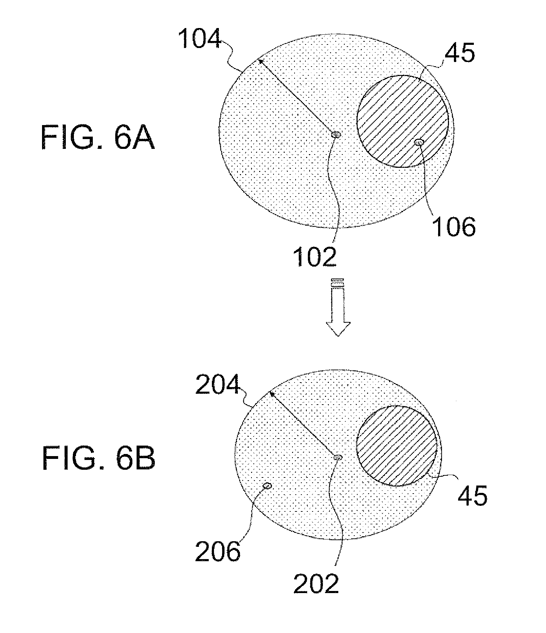

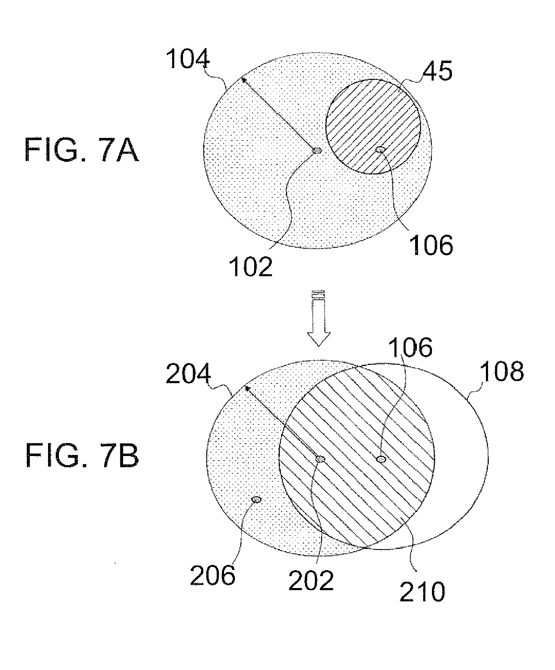

Next, Figs. 4, 5, 6, and 7 are referred to with respect to a relationship between the inputted vital information and the authentication range. Fig. 4 is a diagram illustrating a relationship between the registered information and a range of the vital information by which a person is the identified one. Figs. 5A and 5B are diagrams illustrating the comparison result when the user himself/herself performs the authentication at the first step and the second step. Figs. 6A and 6B are diagrams illustrating a comparison result when another person performs the authentication at the second step. Figs. 7A and 7B are diagrams illustrating the authentication range at the second step in consideration of the vital information at the first step. Incidentally, Figs. 4, 5, 6, and 7 are examples and the present art is not limited to those.

As illustrated in Fig. 4, a threshold 43 for determining whether or not a person is the identified one by the similarity of the vital information and a range 44 of the vital information by which a person is the identified one are setted to the registered information 42 registered in advance. The authentication processing is performed after passage of time from the registration of the registered information 42. For example, in consideration of the deviation of the input position of the vital information and the change in vital information due to the change in body condition of the user, the range 44 of the vital information by which it is determined that a person is the identified one is setted to determine whether a person is the identified one within a wide range thereof.

However, the difference (change) of the vital data in one day is not so large within the range 44 of the vital information by which it is determined that a person is the identified one, and is within a predetermined range 45. That is, if the difference is out of the predetermined range 45, when the authentication is performed by the identified person, the difference is within the range 44 of the vital information by which it is determined that a person is the identified one on the basis of the registered information 42. However, when another person having the vital information similar to that of the user performs the authentication, there is a danger of determining that the other person is the user himself/herself and the error for allowing another person is increased.

Then, according to an authentication method with the authentication system 2, a predetermined range 108 based on the first vital information 106 subjected to the authentication at the first step is setted as a characteristic condition of the user himself/herself at the day.

Figs. 5A and 5B illustrates an example in which the user himself/herself performs the authentication at the first step and the second step. Herein, Fig. 5A is a diagram illustrating a result of the authentication at the first step. Fig. 5B is a diagram illustrating a result of the authentication at the second step.

In the authentication at the first step, as illustrated in Fig. 5A, the vital information 106 of the user himself/herself is within the authentication range 104 based on the first registered information 102, the user can be subjected to the authentication. At this time, the vital information 106 of the user is within the difference range 45 of the vital information of the identified person at the day.

In the authentication at the second step, as illustrated in Fig. 5B, the second vital information 206 inputted in the processing of the authentication at the second step is within the authentication range 204 based on the second registered information 202, and is similarly within the difference range 45 of the vital data of the identified person at the day.

That is, in the authentication of the user himself/herself, the inputted vital information 106 and 206 is within the predetermined range 45 in the authentication ranges 104 and 204 setted by the biometrical devices 10 and 20.

Next, Figs. 6A and 6B illustrate an example of a result of the authentication when the authentication at the first step is performed by the user himself/herself, and the authentication at the second step is performed by another person. In this case, Fig. 6A is a diagram illustrating a result of the authentication at the first step. Fig. 6B is a diagram illustrating a result of the authentication at the second step.

Since the authentication at the first step is performed by the user himself/herself, the authentication result is within the authentication range 104 based on the registered information 102 as illustrated in Fig. 6A, and is also within the difference range 45 of the vital information of the identified person at the day.

On the other hand, when the authentication at the second step is performed by another person having the vital information that is extremely similar to the user himself/herself. As illustrated in Fig. 6B, although the vital information is within the authentication range 204 based on the second registered information 202, it is out of the difference range 45 of the vital information of the identified person at the day. That is, although a condition of the set authentication range 204 is satisfied because of the living body extremely similar to the user, the vital information may not have characteristics exhibited only at the day.

Therefore, when the first vital information 106 inputted by the user himself/herself clears the authentication at the first step in the authentication system 2 as illustrated in Fig. 7A, the authentication at the second step sets the authentication range 108 with the first vital information 106 inputted by the authentication at the first step as the center as illustrated in Fig. 7B. That is, the authentication range 108 is setted as the authentication range in consideration of the difference range of the vital information at one day. Therefore, the vital information accepted at the previous step is used at the next step in the setting of the authentication at plural steps, and chain authentication is performed with the multiuse of vital information. With respect to the second vital information 206 inputted to the second biometrical device 20, the overlapped range 210 of the authentication range 204 based on the second registered information 202 registered-in-advance and the authentication range 108 based on the first vital information 106 is subjected to the authentication.

In this case, although the vital information 206 inputted in the authentication at the second step illustrated in Fig. 7B is within the authentication range 204 based on the second registered information 202, the vital information 206 is not within the authentication range 108 based on the first vital information 106. Therefore, the vital information 106 may not be subjected to the authentication at the second step.

Incidentally, the above-mentioned example illustrates the authentication range by the second step. Alternatively, after the third step, the common portion may be setted as a new authentication range by adding a condition of the authentication range based on the vital information subjected to authentication after the second step in addition to the authentication range 108 based on the first vital information 106.

Further, with the authentication system 2 having plural steps, upon performing the authentication from the halfway step, if the vital information by the previous step does not exist, the authentication may not be performed, thereby preventing the illegal intrusion and improving the authentication accuracy and the security levels.

Like the structure, the characteristic condition of the user himself/herself at the day is added, the vital information is multiple-used, and the chain authentication is thus executed. Therefore, if another person having similar vital information is subjected to illegal authentication, when the vital information is not similar to characteristics of the first vital information at the day inputted by the user himself/herself in the authentication at the first step, the person may not be subjected to the authentication, thereby improving the security. Further, since the change in characteristics at one day is small, if the first vital information inputted at the first step is of the user himself/herself, the authentication at all steps is allowed. The authentication method prevents the situation in which the user himself/herself from is not subjected to the authentication, and the security levels and the convenience are improved.

Hereinbelow, other characteristic items and advantages will be described according to the above-mentioned embodiments.

With the authentication system 2, in the biometrical authentication at an arbitrary step of plural steps, the vital information of the user is obtained for the biometrical authentication at the step, the obtained vital information is compared with the registered vital information that is registered in advance for the authentication at the step, and the personal authentication at the step is executed. Herein, when the personal authentication is successful and it is determined that a person is the registered person, the vital information obtained at the step is transmitted to the authentication device at the next step, the authentication device at the next step that obtains the vital information acquires the vital information of the user for the biometrical authentication at the step similarly to the previous step, and the acquired vital information is compared with the registered vital information that is registered in advance for the authentication at this step. When the matching is obtained as a result of the comparison, the vital information obtained from the user at the step is further compared with the vital information received at the previous step. When the matching is obtained in this case, the identified person is specified.

With the authentication system 2, the personal authentication is performed, the vital information obtained here is thereafter transmitted to the authentication device at the next step, and the personal authentication is performed. This routine is continuously executed at plural steps.

With the authentication system 2, in the biometrical authentication at the next step, the vital information that is registered in advance is combined to the vital information received at the previous step for the authentication at the current step. The obtained vital information is compared with the vital information of the user obtained at the current step, and it is determined that a person is the identified one.

Upon transmitting the vital information obtained at an arbitrary step to the next step, the vital information obtained by combining (adding and processing) the vital information obtained at the current step to the vital information received at the step previous from the current step is transmitted to the next step. At the next step, the biometrical authentication is performed by using the received combined vital information, and it is determined whether or not a person is the identified one.

After the vital information obtained at an arbitrary step is authenticated and the authentication is successful, the vital information is transmitted to the next step, and is stored so as to be used for the biometrical authentication after the step next to the current one. When the same user at the current step performs the authentication again, as mentioned above, the personal authentication is executed by using the vital information that is registered in advance and the stored vital information that is obtained from the user at the previous time.

After a regular user performs the biometrical authentication at the first step, the latest vital information obtained at the first step is transmitted after the second step. Therefore, the authentication at the day is executed by the latest vital information of the user. As compared with the personal authentication using only the vital information that is registered in advance, without increasing the error rate for refusing the identified person, an error rate for allowing a non-identified person is greatly reduced and the authentication accuracy is improved. With the multi-step authentication system for the shift to area at a higher security level via the multi-step authentication for the in/out-mode, the authentication accuracy after the second step is automatically improved.

In the case of a user that is allowed to enter a low-security area at the first step but is not allowed to enter an intermediate-security area at the second step, the user can legally pass through the authentication device at the first step by using the registered information of the user. Thereafter, if the user illegally passes through the authentication at the second step with impersonation, the user may not be authenticated. In this case, with the conventional method, a range for determining that the user is the identified one by the authentication device at the second step is relatively wide and the error rate for allowing a non-identified person is large. Therefore, an illegal intruder is allowed as the identified person. However, according to the present art, a range for which a person is allowed as the identified one by the authentication device at the second step is wider than that according to the conventional art, and the error rate for allowing a non-identified person is small. Therefore, the illegal intruder is refused with a possibility higher than that according to the conventional art.

When hardware for communication with the authentication devices already exists, the change of the hardware is not required and only software may be changed, thereby raising-up the advantages in view of costs.

### Second Embodiment:

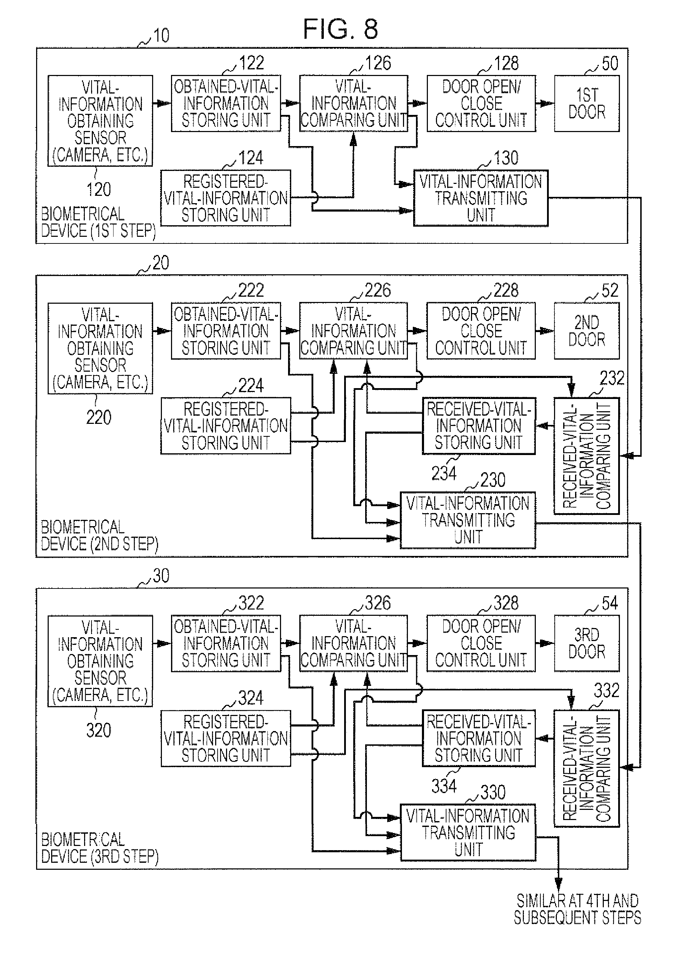

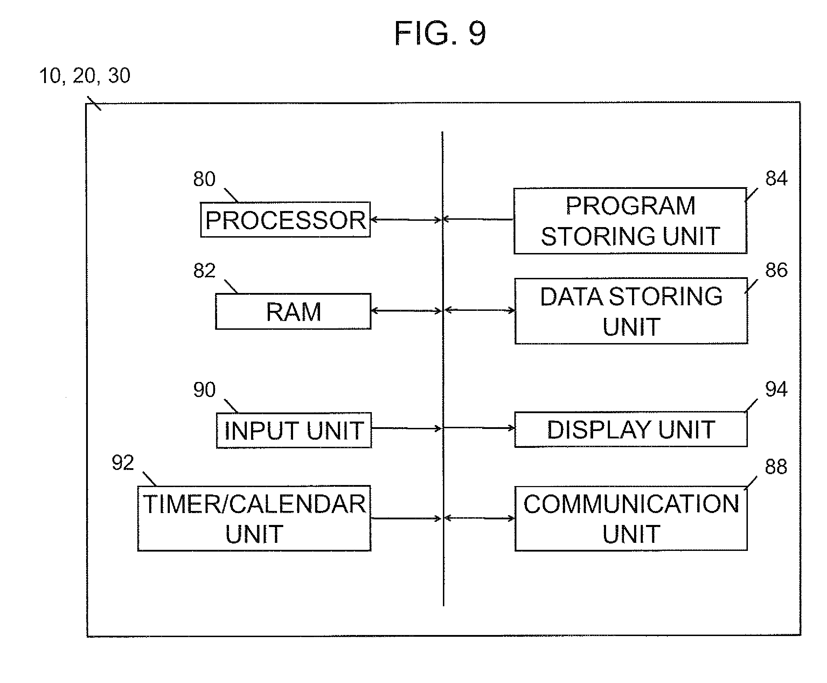

Next, Figs. 8 and 9 are referred to with respect to a personal authentication device according to the second embodiment. Fig. 8 is a diagram illustrating an example of a functional structure of a biometrical device at the first to third steps according to the second embodiment. Fig. 9 is a diagram illustrating an example of a hardware structure of the biometrical device. Referring to Figs. 8 and 9, the same reference numerals denote the components identical to those illustrated in Figs. 1 and 3. Further, the structures illustrated in Figs. 8 and 9 are examples and the present art is not limited to those.

As illustrated in Fig. 8, the authentication system 2 has three steps of the authentication having steps using the biometrical devices 10, 20, and 30, Further, the biometrical device 10 at the first step performs the authentication at the lowest-security levels, controls open/close operation of a first door 50, and obtains the first vital information 106 as characteristic information of a user at the day. For example, the vital-information obtaining means that obtains information such as the fingerprint and vein comprises: a vital-information obtaining sensor 120 such as a camera; an obtained-vital-information storing unit 122; a registered-vital-information storing unit 124; a vital-information comparing unit 126; a door open/close control unit 128; and a vital-information transmitting unit 130.

With the biometrical device 20 at the second step, the second vital information 206 inputted by the user is subjected to the authentication by using the second registered information 202 and the first vital information 106 transmitted from the biometrical device 10 at the first step, thereby controlling the open/close operation of a second door 52. Then, the biometrical device 20 at the second step comprises: a vital-information obtaining sensor 220; an obtained-vital-information storing unit 222; a registered-vital-information storing unit 224; a vital-information comparing unit 226; a door open/close control unit 228; a vital-information transmitting unit 230; a received-vital-information comparing unit 232; and a received-vital-information storing unit 234.

Similarly, the biometrical device 30 at the third step controls the open/close operation of a third door 54, and comprises: a vital-information obtaining sensor 320; an obtained-vital-information storing unit 322; a registered-vital-information storing unit 324; a vital-information comparing unit 326; a door open/close control unit 328; a vital-information transmitting unit 330; a received-vital-information comparing unit 332; and a received-vital-information storing unit 334.

Although the description is given with three steps, the present art is not limited to this and can be applied to two steps and four steps or more.

The vital-information obtaining sensors 120, 220, and 320 correspond to means that obtains the vital information 106, 206, and 306 of the user that is to be subjected to the authentication by shooing at authentication steps. The obtained-vital-information storing units 122, 222, and 322 correspond to the obtained vital information 106, 206, and 306, and present the vital information 106, 206, and 306 to the vital-information comparing units 126, 226, and 326 and the vital-information transmitting units 130, 230, and 330.

The registered-vital-information storing units 124, 224, and 324 correspond to storing means that stores the registered vital information 102, 202, and 302 registered-in-advance to the biometrical devices 10, 20, and 30 at the steps, and presents the stored registered vital information 102, 202, and 302 to the vital-information comparing units 126, 226, and 326 in the case of comparing the vital information.

The vital-information comparing units 126, 226, and 326 correspond to comparing means that compares the inputted vital information 106, 206, and 306 with the registered vital information 102, 202, and 302, and further compares the vital information 106, 206, and 306 with the vital information 106 and 206 by the previous step in the authentication after the second step. In the case of the vital information that is determined to be authenticated as a result of the comparison, a notification indicating this is sent out to the door open/close control units 128, 228, and 328. Simultaneously, the results of the comparison processing are notified to the vital-information transmitting units 130, 230, and 330, and the biometrical device at the next step sends out a notification indicating that the inputted vital information 106, 206, and 306 is subjected to the authentication processing.

The door open/close control units 128, 228, and 328 receive the comparison results from the vital-information comparing units 126, 226, and 326, and control the open/close operation of the doors 50, 52, and 54 at the steps with respect to the vital information that is authenticated. The vital-information transmitting units 130, 230, and 330 at the steps correspond to means that transmits the vital information obtained at the steps and the vital information transmitted from the previous step thereof to the biometrical device at the next step, when it is determined with the comparison in the vital-information comparing units 126, 226, and 326 that a person is the identified one. In this case, the vital-information transmitting units 230 and 330 after the second step may transmit only the vital information 106, 206, and 306 obtained at the steps. Alternatively, the vital information obtained at the current step may be combined to the vital information at the previous step stored in the received-vital-information storing units 234 and 334 and may be then transmitted.

The combination processing may use a simple arrangement of a plurality of pieces of image information of the vital information 106, 206, and 306 obtained by the vital-information obtaining sensors 120, 220, and 320. Further, when the vital information uses the amount of characteristics such as fingerprint, for example, the position and number of the amount of characteristics are calculated and are used for the comparison of the identification, i.e., an additional amount of characteristics is re-structured, and the combination processing may be performed in accordance with characteristics of the vital information.

The received-vital-information comparing units 232 and 332 provided for the biometrical devices 20 and 30 after the second step use the vital information transmitted from the vital-information transmitting units 130 and 230 at the previous step, execute the comparison processing of the registered vital information 202 and 302, and store the processing results to the received-vital-information storing units 234 and 334. Further, in the authentication processing after the second step, the registered vital information 202 and 302 that is registered in advance is compared with each other, is then compared with the vital information 106 and 206 by the previous step stored in the received-vital-information storing units 234 and 334, and it is determined, only when all vital information is subjected to the authentication, that the user is the just registered identified person.

Next, Fig. 9 is referred to with respect to an example of a hardware structure of a computer forming the biometrical devices at the steps. The structure illustrated in Fig. 9 is an example and the present art is not limited to this. Although the biometrical devices at the steps have the following structures, the same reference numerals denote the same components.

The biometrical devices 10, 20, and 30 at the steps individually comprise: a processor 80; a RAM (Random Access Memory) 82; a program storing unit 84; a data storing unit 86; a communication unit 80; an input unit 90; a timer/calendar unit 92; and a display unit 94.

The processor 80 corresponds to an OS (Operating System) for controlling the basic operation of the biometrical devices 10, 20, and 30, or means that reads the vital information obtaining processing and the registered information and executes operation processing of the comparison processing and an application program for executing the door open/close control. Further, the processor 80 transmits and receives data to/from the data storing unit 86 and the communication unit 88 and controls functional units.

The RAM 82 is a work area for executing the program operation processing, and forms the vital-information comparing units 126, 226, and 326 (Fig. 8), the door open/close control units 128, 228, and 328, and the received-vital-information comparing units 232 and 332 by operating control programs.

As mentioned above, the program storing unit 84 stores an OS, a comparison processing program for the authentication, and a door open/close control program. The data storing unit 86 is a database (DB), and comprises: the obtained-vital-information storing units 122, 222, and 322 that store the vital information 106, 206, and 306 of the user transmitted from the vital-information obtaining sensors 120, 220, and 320; the registered-vital-information storing units 124, 224, and 324 that store the registered vital information 102, 202, and 302; and the received-vital-information storing units 234 and 334 that store the vital information transmitted from the biometrical device at the previous step and the comparison result at the current step.

The communication unit 88 transmits an operation instruction and the obtained vital information 106, 206, and 306 to the biometrical devices 20 and 30 at the next step by wireless or cable. The input unit 90 forms the vital-information obtaining sensors 120, 220, and 320 comprising a camera, and may input information with a keyboard or mouse provided for the biometrical devices 10, 20, and 30.

The timer/calendar unit 92 corresponds to timer means having time information or information such as year, month, and day, or means that externally collects information such as time. For example, the timer/calendar unit 92 may count the time from the input of the vital information in consideration of the difference range 45 (Fig. 7A) at the day with respect to the authentication range 108 (Fig. 2B) based on the first vital information 106 obtained by the biometrical device 10 at the first step and, alternatively, may perform control operation using the date with a calendar function. Further, the display unit 94 is display means, such as a monitor, that instructs a routine for the authentication processing and for displaying the comparison result.

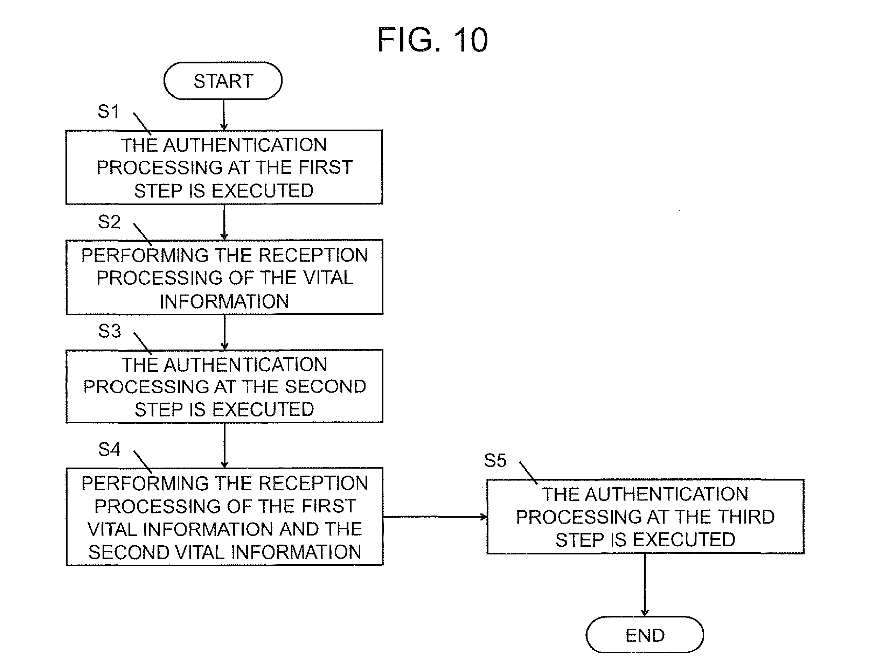

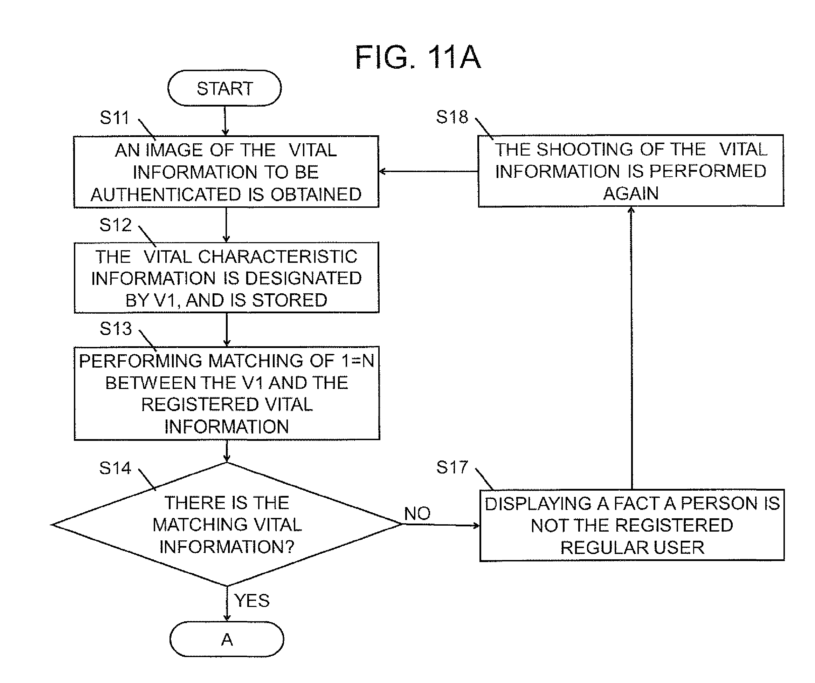

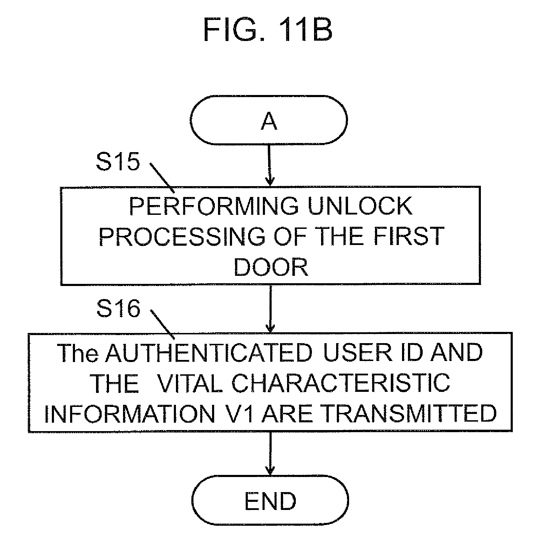

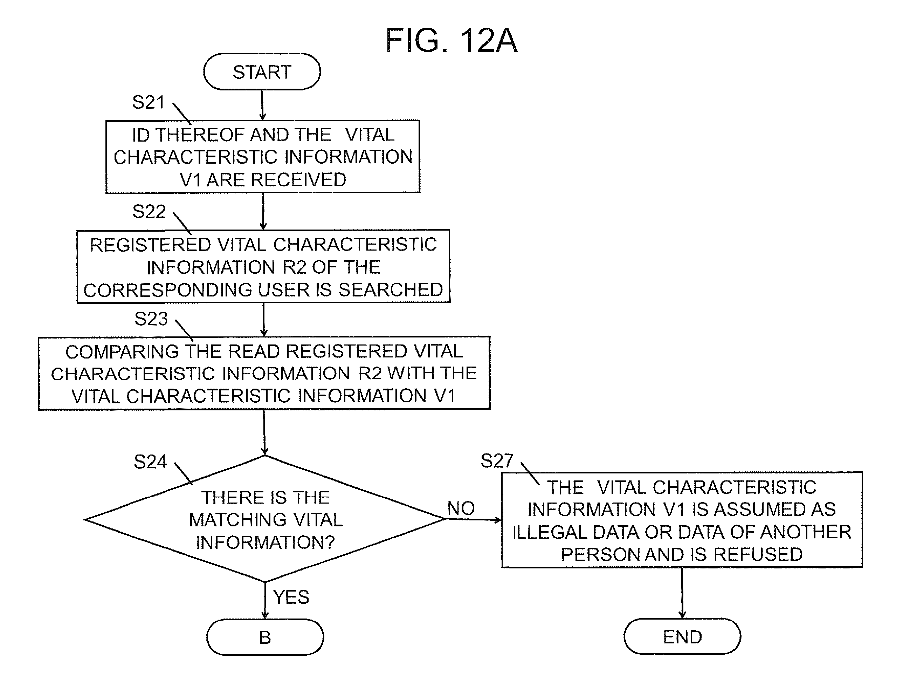

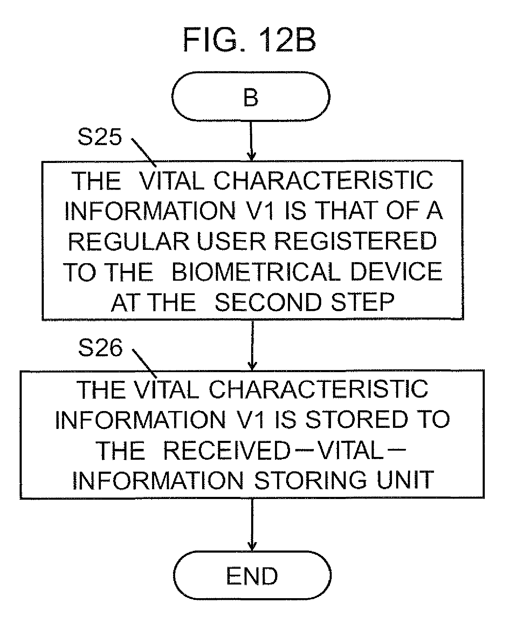

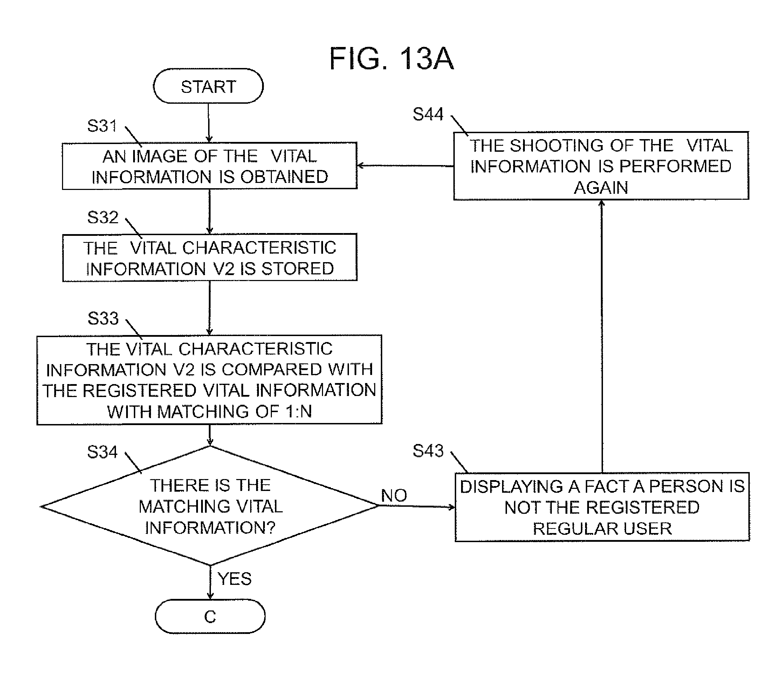

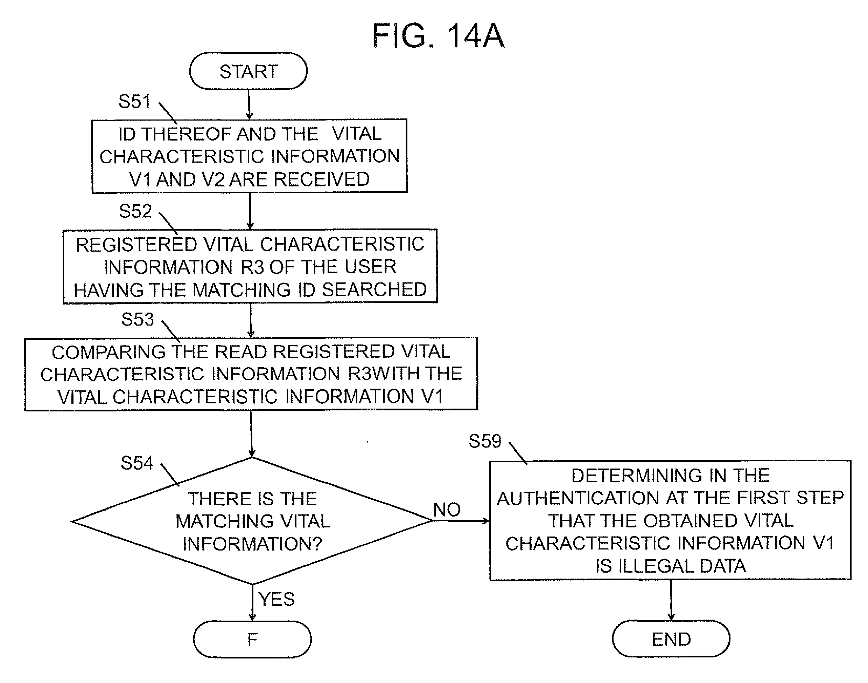

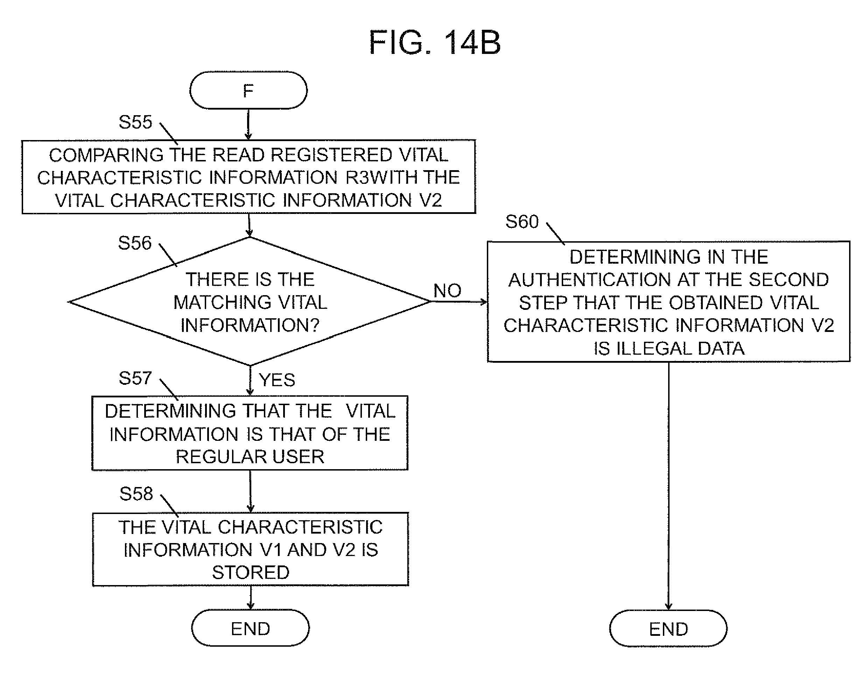

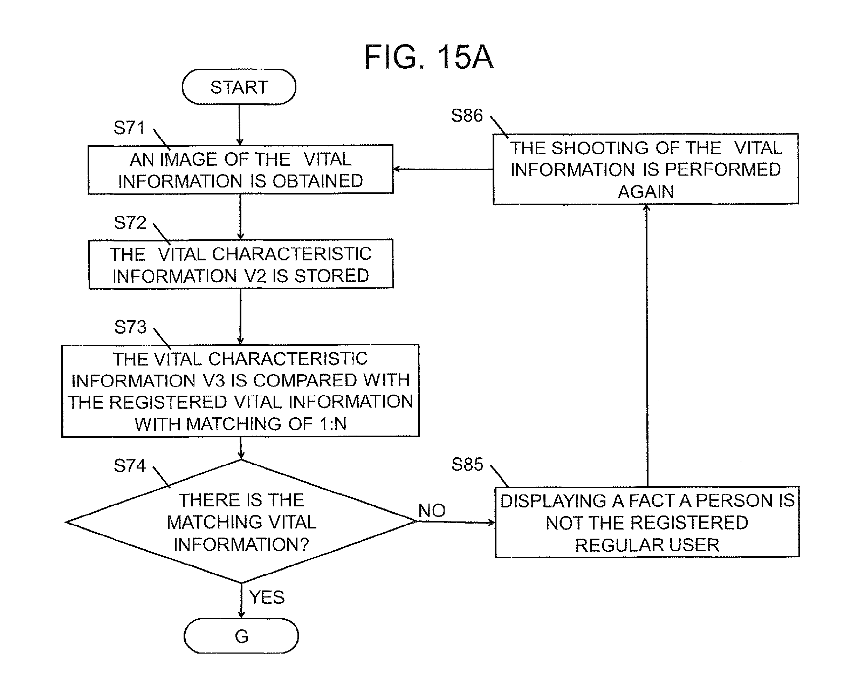

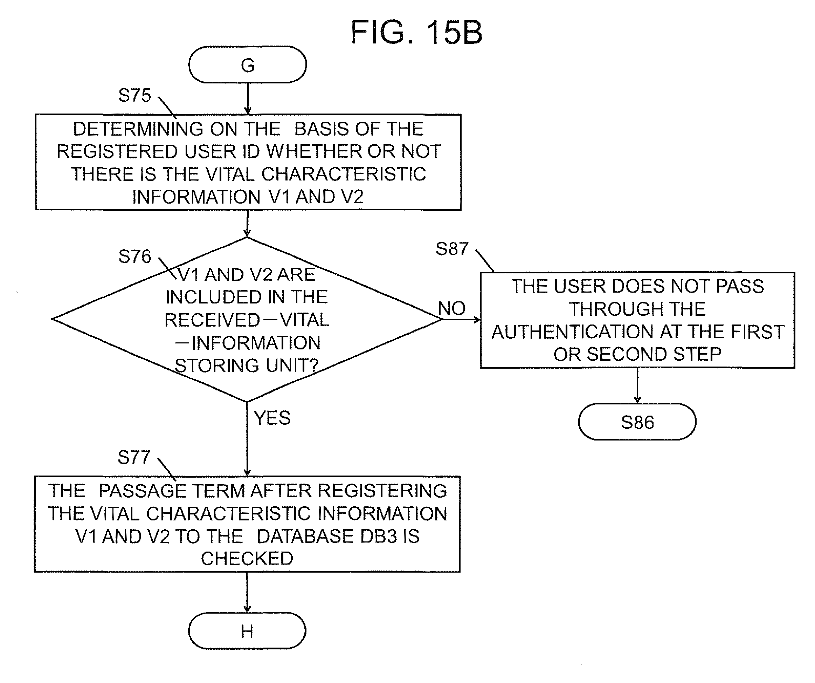

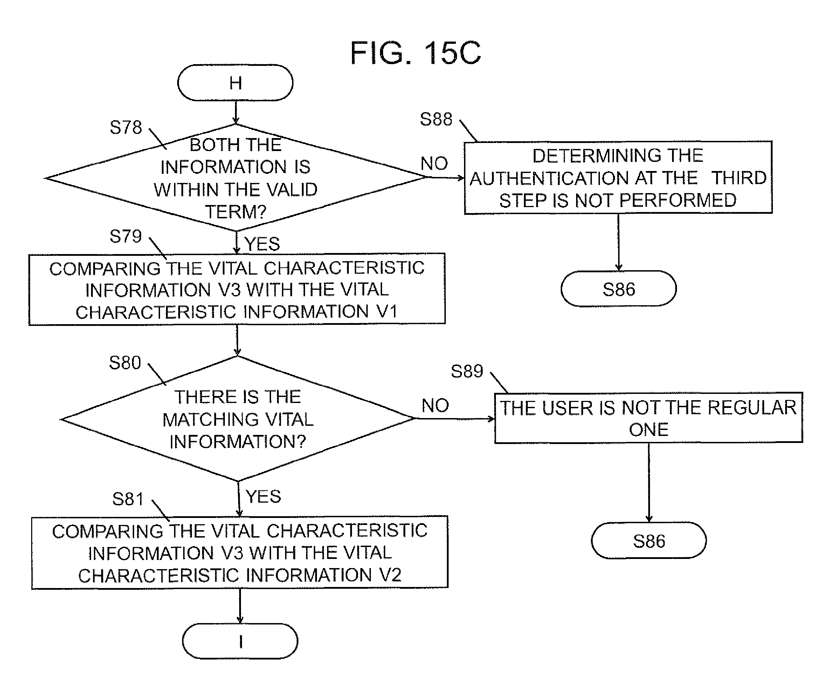

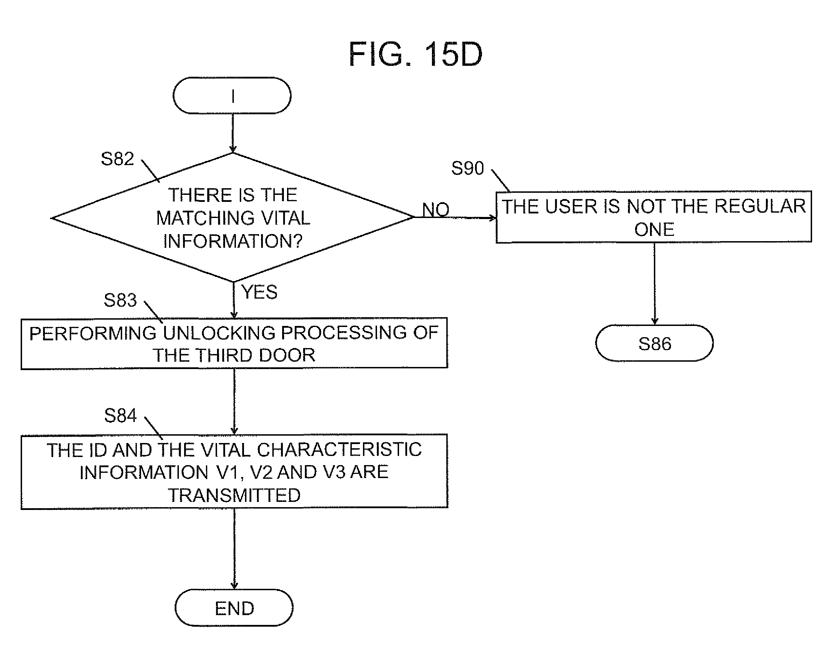

Next, Figs. 10, 11, 12, 13, 14, and 15 are referred to with respect to an authentication method and an authentication program with an authentication system 2 having a plurality of the biometrical devices. Fig. 10 is a flowchart illustrating the authentication method and processing of the authentication program. Figs. 11A and 11B are flowcharts illustrating the authentication processing of the biometrical device at the first step. Figs. 12A and 12B are flowcharts illustrating reception processing of the vital information from the biometrical device at the first step. Figs. 13A to 13D are flowcharts illustrating the authentication processing of the biometrical device at the second step. Figs. 14A and 14B are flowcharts illustrating reception processing of the vital information from the biometrical device at the second step. Figs. 15A to 15D are flowcharts illustrating the authentication processing of the biometrical device at the third step. Incidentally, processing contents in Figs. 10, 11, 12, 13, 14, and 15 are examples and the present art is not limited to those.

In the authentication processing according to the second embodiment, the authentication processing at three steps will be illustrated. As illustrated in Fig. 10, the biometrical device 10 at the first step performs the authentication processing (in step S1). When the authentication is performed in the authentication processing, the biometrical device 20 at the second step obtains the first vital information 106 inputted from the biometrical device 10 at the previous step by the user and thus performs the reception processing of the vital information (in step S2). Then, the biometrical device 20 at the second step performs the authentication processing by using the registered vital information and the first vital information 106 (in step 53).

Similarly, the biometrical device 30 at the third step performs the reception processing of the first vital information 106 and the second vital information 206, from the biometrical device 20 at the second step (in step S4). Then, the authentication processing at the third step is executed by using the vital information 106 and 206 received from the biometrical device 20 at the second step and the registered vital information 302 (in step S5).

Among those, Figs. 11A and 11B are referred to with regard to the authentication processing (in step S1) of the biometrical device 10 at the first step. In the authentication processing, the vital information 106 inputted by the user 12 is compared with the registered vital information 102, and it is determined whether or not the user 12 is authenticated, i.e., whether or not the vital information of the user 12 is registered to the database 86. Then, when it is determined the user 12 is authenticated, the vital information 106 of the user 12 is transmitted to the biometrical device 20 at the second step.

First of all, an image of the vital information 106 presented by the user 12 to be authenticated is obtained by a camera in the vital-information obtaining sensor 120 for the biometrical device 10 (in step S11). Specific vital characteristic information is extracted from the obtained image information, and the vital characteristic information is designated by V1, and is stored to the obtained-vital-information storing unit 122 in the database 86 (in step S12). The vital characteristic information V1 obtains a fingerprint image, a characteristic point extracted from a vein image, or information of a contour extracted from a palm image. The extracted information is not limited to one, and a plurality of types of information may be individually stored or may be combined and stored.

The registered vital information 102 that is registered in advance is read out from the registered-vital-information storing unit 124 in the database DB1 (86) in the biometrical device 10 at the first step, and the vital-information comparing unit 126 performs matching of 1=N (in step S13) between the obtained vital characteristic information V1 and the read registered vital information 102. When there is the matching vital information in the comparison processing in step S13 (YES in step S14), the display unit 94 in the biometrical device 10 displays a fact that a person is determined as the regular user, and the door open/close control unit 128 performs unlock processing of the first door 50 (in step S15).

The authenticated user ID and the vital characteristic information V1 (the vital information 106) are transmitted from the vital-information transmitting unit 130 to the biometrical device 20 at the second step (in step S16).

When there is not the matching vital information in step S14 (NO in step S14), the display unit 94 displays a fact that a person is not the registered regular user (in step S17), and further displays a fact that the shooting of the vital information is performed again (in step S18). Then, the processing returns to step S11.

Next, Figs. 12A and 12B is referred to with respect to the reception processing (in step S2: Fig. 10) of the vital information 106 from the biometrical device 10 at the first step in the biometrical device 20 at the second step.

In the reception processing, it is determined whether or not the vital characteristic information V1 (the vital information 106) of the user 12 subjected to the authentication at the first step is subjected to the authentication at the second step. When the vital characteristic information V1 is to be authenticated, the processing shifts to the authentication processing. That is, as mentioned above, even in the case of the vital information 106 subjected to the authentication at the first step, if the vital information 106 is not within a registered range 204 at the second step, the authentication is not performed by the identified person.

In the authentication processing at the first step, when the user 12 that inputs the vital characteristic information V1 (the vital information 106) is the registered person (identified person), ID thereof and the vital characteristic information V1 are received (in step S21). Registered vital characteristic information R2 (the registered vital information 202) of the corresponding user is searched on the basis of the ID from the registered-vital-information storing unit 224 in the database DB2 (86) in the biometrical device 20 at the second step (in step S22).

The received-vital-information comparing unit 232 compares the read registered vital characteristic information R2 with the vital characteristic information V1 (in step S23). As a consequence, it is determined whether or not the vital information matches each other (in step S24). In the comparison processing, as described with reference to Figs. 2A to 2C, it is determined whether or not the vital information 106 obtained in the authentication at the first step is within the authentication range 204 based on the registered vital information 202. That is, if the registered identified person is regularly authenticated in the authentication at the first step, the identified person is to be authenticated in the authentication at the second step. However, when a person is illegally authenticated in the authentication at the first step and when the identified person that is registered by another person is authenticated by impersonation, double check is required and the biometrical device 20 at the second step prevents the storage of illegal data. Thus, when another person erroneously passes through the authentication at the first step, the person is not authenticated after the second step.

When the vital information matches each other (YES in step S24), it is determined that the vital characteristic information V1 is that of a regular user registered to the biometrical device 20 at the second step (in step S25). The vital characteristic information V1 is stored to the received-vital-information storing unit 234 in the database DB2 (86) in the biometrical device 20 at the second step (in step S26). At this time, the received-vital-information storing unit 234 sets the vital characteristic information V1 registered with the user ID to be searchable.

When the vital information does not match each other in the comparison processing in step S24 (NO in step S24), the vital characteristic information V1 received from the biometrical device 10 at the first step is assumed as illegal data or data of another person and is thus refused (in step S27). In this case, the illegal authentication may be displayed on the display unit 94 in the biometrical device 20 at the second step.

Figs. 13A to 13D are referred to with respect to the authentication processing (in step S3: Fig. 10) at the second step. Referring to Figs. 13A to 13D, a specific description is omitted of the same processing as that illustrated in Figs. 11A and 11B.

Similarly to the authentication at the first step, in the authentication processing, the vital information 206 inputted by the user 12 is compared with the registered vital information 202, and the vital information 206 is further compared with the vital information 106 at the first step. It is determined whether or not the vital information is within the authentication range 204 of the registered vital information 202 setted to the biometrical device 20 at the second step, and the authentication of the vital information 106 at the first step determines whether or not the vital information matches characteristics of the vital information at the day of the user subjected to the authentication at the first step.

First of all, with the biometrical device 20 at the second step, the vital information 206 of the user 12 that desires authentication is additionally obtained (in step S31). Similarly to step S11, upon obtaining the vital information, an image of the vital information is obtained by shooting with the camera in the vital-information obtaining sensor 220.

The vital characteristic information V2 is extracted from the obtained vital image, and is stored into the obtained-vital-information storing unit 222 (in step S32). The vital characteristic information V2 is compared with the registered vital information 202 that is registered in advance in the registered-vital-information storing unit 224 in the database DB2 (86) with matching of 1:N (in step S33). It is determined whether or not there is matching vital information (in step S34).

When there is matching vital information (YES in step S34), subsequently, the processing shifts to the comparison processing with the vital information 106 at the current day obtained by the biometrical device 10 at the first step. First of all, the vital information is searched in the received-vital-information storing unit 234 in the database DB2 (86) on the basis of ID of the user having matching vital characteristics, and it is determined whether or not there is the vital characteristic information V1 (the vital information 106) (in step S35). As a consequence, when the vital characteristic information V1 is stored (YES in step S36), it is checked whether or not a passage time after registering the vital characteristic information V1 to the database DB2 (86) is within a valid term (in step S37). That is, as illustrated in Fig. 7B, in the authentication at the first step, there is a small difference between the obtained vital characteristic information V1 and the characteristic information, e.g., the vital information 106 at the current day is an authentication condition. Therefore, the passage term after the authentication at the first step is checked. The check operation of the passage term is performed by the timer/calendar unit 92.

When the passage term is within the valid term (YES in step S38), the vital-information comparing unit 226 compares the vital characteristic information V2 with the vital characteristic information V1 (in step S39). When the comparison result indicates the matching (YES in step S40), the display unit 94 displays a message indicating the matching of the comparison result, and the door open/close control unit 228 performs unlocking processing of the second door 52 (in step S41). The vital-information transmitting unit 230 transmits the ID of the user that is determined as the identified person and the vital characteristic information V1 and V2 is transmitted to the biometrical device 30 at the third step (in step S42).

When it is determined in step S34 that there is not the vital information matching the registered-vital-information storing unit 224 in the database DB2 (86) (NO in step S34), it is not determined that the person is not the registered regular user. Therefore, such a message is displayed on the display unit 94 (in step S43). A display operation for inputting the vital information again is prompted (in step S44).

When it is determined in step S36 that the vital characteristic information V1 is not included in the received-vital-information storing unit 234 (NO in step S36), the user that desires the authentication determines that the person does not pass through the authentication at the first step (in step S45), the display operation for re-inputting the vital information in step S44 is promoted.

When it is determined in step S38 that the passage term is not within the valid term (in step S38), a long time passes after the authentication at the first step and it is determined that the authentication at the second step is not performed (in step S46). Then, the display operation in step S44 is performed.

It is determined in step S40 that the vital information does not match the vital characteristic information inputted in the authentication at the first step (NO in step S40), it is determined that the person is not the registered regular user (in step S47), and the operation in step S44 is performed.

Next, Figs. 14A and 14B are referred to with respect to the reception processing of the vital information (in step S4: Fig. 10) in the biometrical device 30 at the third step. The processing in Figs. 14A and 14B of the same components as the processing in Figs. 12A and 12B is not specifically described.

Similarly to the reception processing of the vital information, it is determined whether or not the vital information 106 and 206 by the previous step can be subjected to the authentication at the third step. Only when both the vital information can be subjected to the authentication, both the information is used as comparison information at the third step.

In the authentication at the second step, the ID of the user that is determined as the identified person and the vital characteristic information V1 and V2 obtained in the authentication at the first and second steps are received (in step S51). Registered vital characteristic information R3 (the registered vital information 302) of the user having the matching ID is searched on the basis of the registered user ID from the registered-vital-information storing unit 324 in the database DB3 (86) in the biometrical device 30 at the third step (in step S52).

Subsequently, similarly to steps S23 and S24, in order to determine whether or not the vital characteristic information V1 and V2 received from the biometrical devices 10 and 20 at the previous step is within the authentication range 304 of the registered vital information 302 at the third step, the received-vital-information comparing unit 332 determines whether or not the vital characteristic information V1 and the vital characteristic information V2 matches the registered vital characteristic information R3 (in steps S53 to S56). When the vital characteristic information V1 and V2 is within the authentication range 304 of the registered vital characteristic information R3 (YES in step S54 and YES in step S56), it is determined that the vital information is that of the regular user (in step S57). The vital characteristic information V1 and V2 is stored to the received-vital-information storing unit 334 of the database DB3 (86) (in step S58).

When it is determined in step S54 or S56 that any of the vital characteristic information V1 or the vital characteristic information V2 does not match the registered vital characteristic information R3 (NO in step S54 or NO in step S56), it is determined in the authentication at the first step or the authentication at the second step that the obtained vital characteristic information V1 or V2 is illegal data or data of another person, and the vital information is reduced and is not stored to the received-vital-information storing unit 334 (in steps S59 and S60).

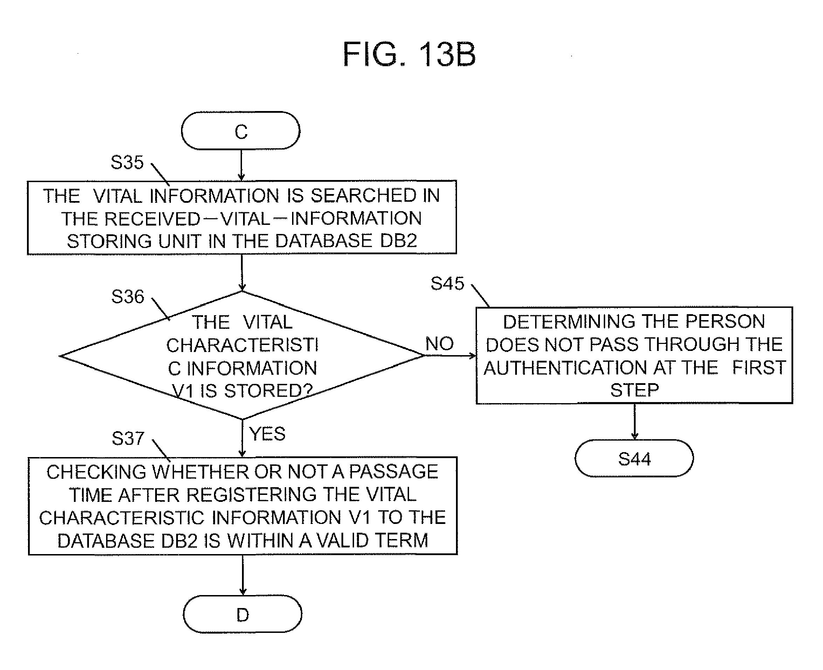

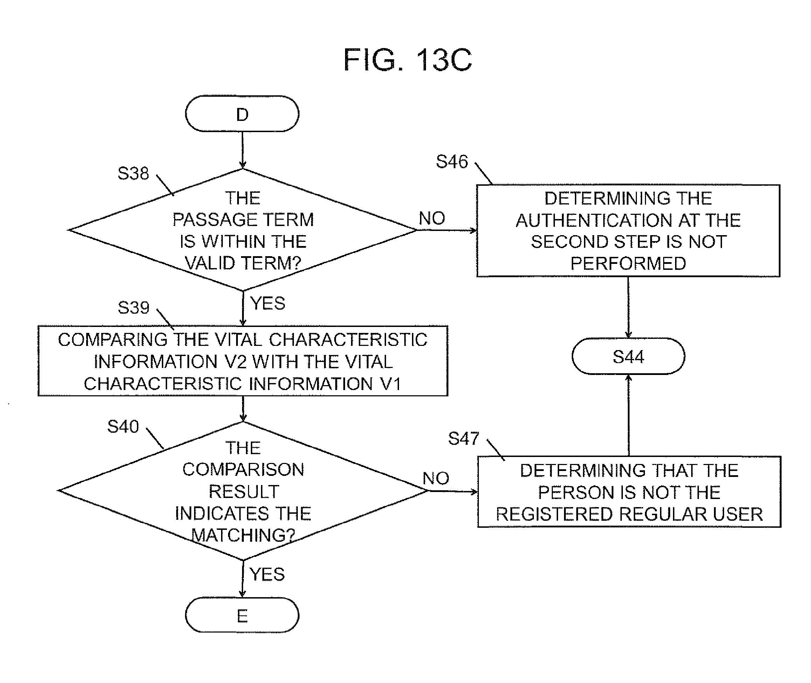

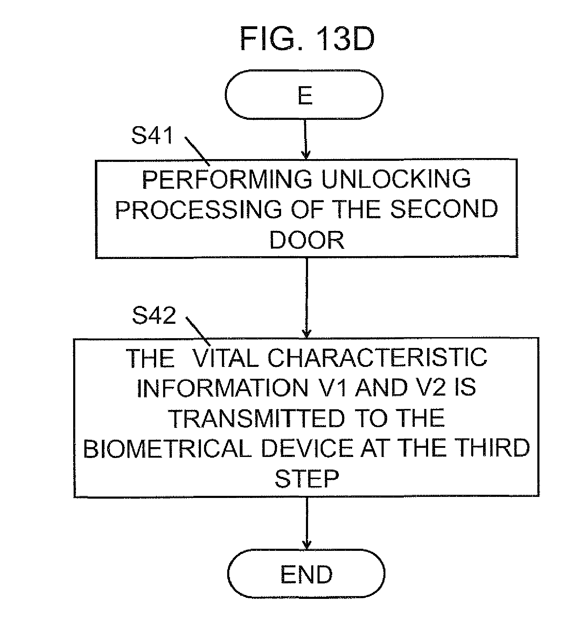

Next, Figs. 15A to 15D are referred to with respect to the authentication processing (in step S5; Fig. 10) in the biometrical device at the third step. Referring to Figs. 15A to 15D, the same processing as that in Figs. 11 and 13 is not described.

Similarly to the authentication processing, in the authentication at the third step, the vital information 306 inputted by the user 12 is also compared with the registered vital information 302. When the vital information 306 is within the authentication range 304, the vital information 306 is compared with the vital information 106 and 206 authenticated by the biometrical devices 10 and 20 by the previous step. Only when the authentication is possible by the comparison with all vital information, the authentication at the third step is possible.

The vital-information obtaining sensor 320 shoots an image of the vital information 306 of the user 12 to be the authenticated (in step S71). The vital characteristic information V3 is extracted from the image information, and is stored to the obtained-vital-information storing unit 322 (in step S72). The vital characteristic information V3 is compared with the characteristic information in the registered-vital-information storing unit 324 with matching of 1:N (in step S73). When there is matching registered vital information 302 (YES in step S74), it is determined on the basis of the registered user ID whether or not there is the vital characteristic information V1 and V2 (in step S75).

When the received-vital-information storing unit 334 includes the vital characteristic information V1 and V2 of the corresponding ID (YES in step S76), the passage term after registering the vital characteristic information V1 and V2 to the database DB3 (86) is checked (in step S77). When both the information is within the valid term (YES in step S78), the vital characteristic information V3 is compared with the vital characteristic information V1 and V2 (in steps S79 to S82).

When the vital characteristic information V3 matches the authentication ranges 108 and 208 (Figs. 2A to 2C) of the vital characteristic information V1 and V2 (YES in step S80 and YES in step S82), a fact that the person is the identified one is displayed and the door open/close control unit 328 performs unlocking processing of the third door 54 (in step S83). When the authentication is thereafter performed, the ID and the vital characteristic information V1, V2, and V3 are transmitted (in step S84).

When it is determined in step S74 that there is not matching vital characteristic (NO in step S74), the processing shifts to step S85 wherein the same processing as that in steps S43 and S44 (Fig. 13A) is executed. Further, when any of the vital characteristic information V1 and V2 or all of them is not included in the received-vital-information storing unit 334, the user 12 does not pass through the authentication at the first or second step (in step S87), and the processing shifts to that in step S86.

When it is determined in step S78 that the authentication is not within the valid term (NO in step S78), the processing shifts to step S88 whereupon the same processing as that in step S46 (Fig. 13C) is performed.

When the information does not match each other in the comparison processing in step S80 or S82 (NO in step S80 and NO in step S82), it is not determined that the user is not the regular one (in steps S89 and S90), and the processing therefore shifts to that in step S86.

In the authentication processing at the second and third steps, the inputted vital information is compared with the registered vital information that is registered in advance. The present art is not limited to this and the comparison with the vital information 106 and 206 obtained from the biometrical devices 10 and 20 at the previous step may be first performed.

With the structure, the authentication information at the previous step is used and the characteristic condition of the user himself/herself during a predetermined valid term is added, thereby preventing the authentication if another person having the similar vital information is to be illegally authenticated and thus improving the security. Further, the change in characteristics during a predetermined valid term is small. Therefore, if the first vital information 106 inputted at the first step is that of the user himself/herself, the user is allowed for the authentication at all steps. The authentication method prevents the situation in which the user himself/herself is not authenticated, thereby improving the convenience.

### Third Embodiment:

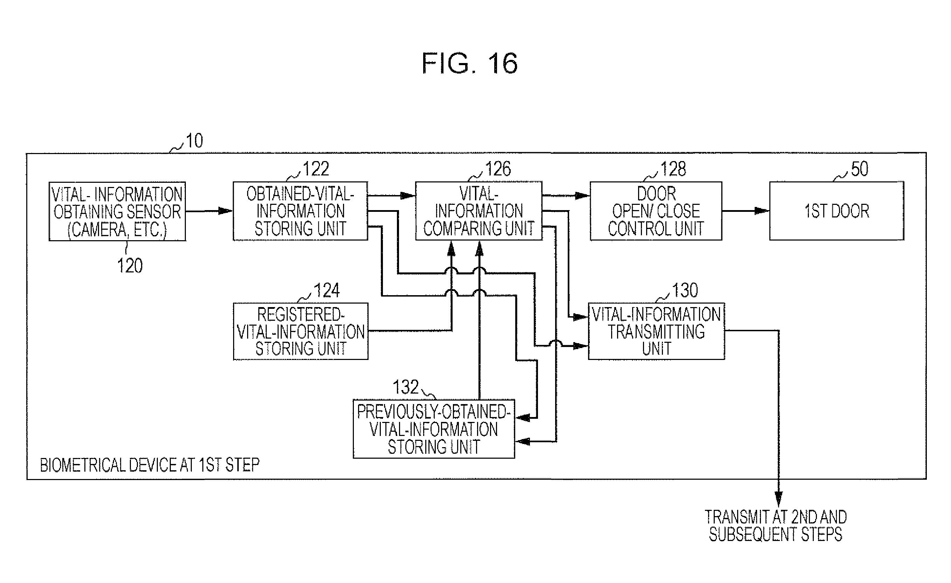

Next, Fig. 16 is referred to according to the third embodiment. Fig. 16 is a functional block diagram illustrating a biometrical device according to the third embodiment. Referring to Fig. 16, the same components as those in Fig. 8 are designated by the same reference numerals and a description thereof will be omitted. Further, the structure illustrated in Fig. 16 is an example and the present art is not limited to this.

In the biometrical device 10 according to the embodiments, the data storing unit 86 (Fig. 9) has the previously-obtained-vital-information storing unit 132. Thus, when the person is authenticated as the identified one in the comparison processing, the obtained vital information 106 is transmitted to the biometrical device 20 at the second step, and is stored into the previously-obtained-vital-information storing unit 132.

When the same user is to be authenticated at the first step again, the vital information 106 stored in the previously-obtained-vital-information storing unit 132 is generically compared with the registered vital information 102 that is registered in advance and is also compared with the vital information 106 that is obtained at the previous step. When it is determined that the person is the identified one in both the comparison, the identified person is authenticated.

With the structure, in the authentication at the first step, the authentication accuracy after the second step is improved. Upon repeating the in/out mode, in the in-mode after the second step, it is prevented that another person is impersonated.

Since the difference range of the vital information is relatively smaller than the registered vital information 102 even after a predetermined term, with the comparison with the vital information 106 within several days in the previously-obtained-vital-information storing unit 132, the comparison accuracy is improved also in the first comparison processing later.

The authentication using the previously-obtained vital information is not limited to the biometrical device 10 at the first step, and may be provided for the biometrical devices 20 and 30 at the second and sequent steps. Further, when the authentication is provided for the biometrical devices 20 and 30 at the second and sequent steps, a comparison range may be setted wider than the authentication range of the vital information obtained from the biometrical device at the previous step obtained at the current day.

### Fourth Embodiment:

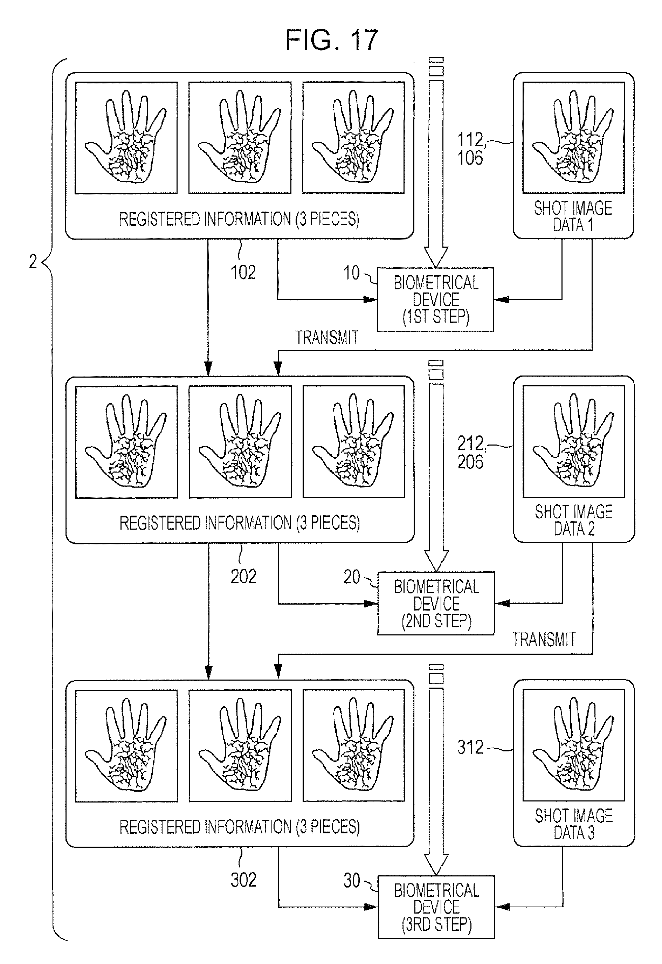

Fig. 17 is referred to according to the fourth embodiment. Fig. 17 is a diagram illustrating processing of the vital information in an authentication system according to the fourth embodiment. Referring to Fig. 17, the same processing and components as those in Fig. 3 are designated by the same reference numerals, and a description thereof will be omitted.

In the authentication system 2, the registered information 202 and 302 at the second and sequent steps is created on the basis of the shot image data 112 (106) and 212 (206) obtained by the biometrical device at the previous step. That is, in the authentication at the steps, three pieces of the registered information 102, 202, and 302 are registered. In this case, in the authentication at the first step, comparison processing is performed between the shot image data 112 (106) inputted by the user 12 and the registered vital information 102 that is already registered. When the person is authenticated as the identified one, the vital-information transmitting unit 130 transmits the shot image data 112 (106) obtained from the user to the biometrical device 20 at the second step. In the biometrical device 20 at the second step that receives the shot image data 112 (106), the registered vital information 202 that is registered in advance is compared with the received shot image data 112 (106). When it is determined that the vital information is within the authentication range 204 (Figs. 2A to 2C), the received shot image data 112 (106) is setted as one or all of the registered vital information 202 having three pieces of the vital information, the additional registered-vital information 202 is created again.

The structure prevents the situation in which it takes a long time for the authentication processing due to the increase in registered vital information to be compared with the inputted vital information, as the authentication advances to the later one. Similarly to the embodiments, the authentication is performed at the previous step and the vital information is that within the authentication range of the registered vital information. Since the registered vital information is additionally created by using the vital information at the day, the security level is improved and the error rate for allowing the identified person is prevented.

As the additional registered vital information according to the embodiments, the obtained vital information is used for the authentication at the next step. Further, the registered vital information is created to be used for the authentication within a predetermined term (e.g., one day or by the authentication at the next day). If the authentication ends, the created registered vital information is canceled and is switched to the original registered vital information. Therefore, this is different from a learning function of the biometrical device.

### Other Embodiments:

According to the embodiments, the biometrical devices 10, 20, and 30 at the steps have PCs for the comparison processing or transmitting processing, a proseccor and a storage. However, the present art is not limited to this and the biometrical devices 10, 20, and 30 have obtaining means (the vital-information obtaining sensors 120, 220, and 320) of the vital information of the camera and display means (the display unit 94). Alternatively, the biometrical devices 10, 20, and 30 may have management computers (PCs) that manage the database 86 in the entire authentication system 2 and systematically perform program operation processing. With the above-mentioned structure, the objects are accomplished.

According to the embodiments, as the authentication at the steps, the example of controlling the door unlocking to a different room is illustrated. However, the present art is not limited to this and the authentication may be used for the authentication processing of the in/out-mode to the same room. When the in/out-mode to the same building is repeated at the same day, the order of the authentication at the next in/out-mode may be changed by the number (the number of authentication times) of the in-mode-times. That is, the authentication range is changed depending on the number of in/out-mode times, and the authentication is performed from the next step by using the vital information first-authenticated at the current day. With the structure, it is possible to prevent the situation in which another person having the similar vital information is authenticated with impersonation of the identified person from the halfway of the in/out-mode, thereby improving the security level.

Next, the technological thought extracted from the embodiments of the present art is described with Claims. The technological thought of the present art can be grasped from the top concept to the bottom concept with variation and levels, and the present art is not limited to the following appendixes.

According to the present art, the following advantages are acquired.

By using vital information registered to biometrical devices at multi-step and also multiple-using vital information obtained for a predetermined term with a small difference of the authentication range, the allowance of another person is prevented and the security is strengthened.

The authorization is performed with vital information authorized by the previous step and the vital information obtained for a predetermined term, thereby preventing the refusal to the allowance of the identified person, improving authorization accuracy, and preventing troublesomeness of user authorization.

Then, other object, feature, and advantage of the present art will be obvious by referring to the attached drawings and embodiments.

The preferable embodiments of the present art are described above. The present art is not limited to the statement and is described within Claims. Obviously, the present art can be modified and changed by the skilled person on the basis of the essentials of the present art disclosed according to the present art. Further, obviously, the modification and change can be included within the range of the present art.

The present art relates to multi-step authentication with different security levels by using vital information. Authentication is performed by using an authentication range based on the vital information authenticated by the previous step as well as the vital information that is previously registered in the biometrical device at the steps. Advantageously, as the authentication advances to the next step, erroneous authentication due to impersonation of another person is prevented and an error for allowing the identified person is also prevented.

As mentioned above, the present invention has been specifically described for better understanding of the embodiments thereof and the above description does not limit other aspects of the invention. Therefore, the present invention can be altered and modified in a variety of ways without departing from the gist and scope thereof.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present inventions have been described in detail, it should be understood that the various changes, substitutions, and alterations could be made hereto without departing from the spirit and scope of the invention.

## Claims

1. A method of authenticating a user comprising:
storing a reference biometric data of the user;
performing initial authentication by obtaining biometric data of the user and comparing the obtained biometric data with the reference biometric data;
storing the obtained biometric data upon successful initial authentication;
performing second and subsequent authentication by obtaining biometric data of the user and comparing instantaneously obtained biometric data with the reference biometric data and the stored obtained biometric data; and
updating the stored obtained biometric data each time the second or the subsequent authentication is successful.

2. The method of claim 1, wherein an authentication range of the reference biometric data of the user compared in the initial authentication is different from an authentication range of the reference biometric data of the user compared in the second authentication.

3. The method of claim 1, wherein a common range between the reference biometric data and the stored obtained biometric data is used at next authentication.

4. The method of claim 1, further comprising setteing an authentication range of the obtained biometric data.

5. An authentication system for authenticating a user comprising:
a first authentication apparatus having a first storage for storing first reference biometric data of the user, and a first processor for performing first authentication by obtaining biometric data of the user and comparing the obtained biometric data with the first reference biometric data; and
a second authentication apparatus having a second storge for storing the obtained biometric data upon successful initial authentication and second reference biometric data of the user, and a second processor for performing second authentication by obtaining biometric data of the user and comparing instantaneously obtained biometric data with the second reference biometric data and the stored obtained biometric data.

6. The authentication system of claim 5, wherein an authentication range of the first reference biometric data is different from an authentication range of the second reference biometric data.

7. The authentication system of claim 5, wherein a common range between the second reference biometric data and the stored obtained biometric data is used at a next authentication.

8. The authentication system of claim 5, wherein the second processor sets an authentication range of the obtained biometric data.

9. A computer-readable recording medium that stores a computer program for authenticating a user, by controlling an apparatus according to a process comprising:
storing a reference biometric data of the user;
performing initial authentication by obtaining biometric data of the user and comparing the obtained biometric data with the reference biometric data;
storing the obtained biometric data upon successful initial authentication;
performing second and subsequent authentication by obtaining biometric data of the user and comparing instantaneously obtained biometric data with the reference biometric data and the stored obtained biometric data; and
updating the stored obtained biometric data each time the second or the subsequent authentication is successful.

10. The computer-readable recording medium of claim 9, wherein an authentication range of the reference biometric data of the user compared in the initial authentication is different from an authentication range of the reference biometric data of the user compared in the second authentication.

11. The computer-readable recording medium of claim 9, wherein a common range between the reference biometric data and the stored obtained biometric data is used at a next authentication.

12. The computer-readable recording medium of claim 9, further comprising setteing an authentication range of the obtained biometric data.
